# NEUE EUROPÄISCHE PATENTSCHRIFT

(11) **EP 1 425 969 B2**
(45) Veröffentlichungstag und Bekanntmachung des Hinweises auf die Entscheidung über den Einspruch: **03.12.2014**
(45) Hinweis auf die Patenterteilung: 24.03.2010
(21) Anmeldenummer: 03025114.4
(22) Anmeldetag: 03.11.2003
(51) Int. Cl.: A21D 13/08, A23L 1/0532, A23L 1/00

(54) **Tortenguss und Verfahren zur Zubereitung von Tortenguss**
Glazing agent for bakery product and process for its preparation
Glaçage pour tarte et procédé de préparation

(30) Priorität: 02.12.2002 DE 10256398
(43) Veröffentlichungstag der Anmeldung: 09.06.2004
(60) Teilanmeldung: 10150196.3
(73) Patentinhaber: Lucullus, Backen & Geniessen GmbH & Co. KG, 64297 Darmstadt (DE)
(72) Erfinder: Pleser, Ingo, Dr., 60487 Frankfurt am Main (DE); Schulz, Eberhard, 64342 Seeheim-Jugenheim (DE)
(74) Vertreter: Richardt Patentanwälte PartG mbB

(56) Entgegenhaltungen:
- EP-A- 0 321 323
- EP-A- 0 437 360
- WO-A-02/094034
- DE-A- 2 420 622
- FR-A- 1 137 740
- FR-A- 2 649 299
- US-A- 3 016 302
- US-A- 3 060 032
- US-A- 4 303 681

## Beschreibung

Die Erfindung betrifft ein Verfahren zur Zubereitung von Tortenguss.

Mit Tortenguss lässt sich ein schnittfähiger Überzug z.B. für Obstkuchen und Torten herstellen. Üblicher Tortenguss beinhaltet als Geliermittel Carrageen (E 407) und als Verdickungsmittel Stärke, z. B. Tapiokastärke.

Bei Carrageen handelt es sich um ein komplexes Gemisch verschiedener Polysaccharide. Carrageen wird aus Rotalgen (Rhodophyceae) gewonnen.

Üblicherweise wird Tortenguss pulverförmig angeboten. Zur Zubereitung wird der pulverförmige Tortenguss in Wasser oder Fruchtsaft eingerührt und die Flüssigkeit wird dann zum Kochen gebracht. Das Aufkochen ist für die Auslösung der Gelbildung und auch zum Aufschließen der Stärke erforderlich.

Ein Nachteil von vorbekannten Tortenguss ist also, dass zur Zubereitung des Tortengusses die Flüssigkeit zum Kochen gebracht werden muss. Damit verbunden ist der Nachteil, dass vor dem Verzehr das Abkühlen des Tortengusses abgewartet werden muss und dass die Gelbildung relativ langsam verläuft.

Der Erfindung liegt die Aufgabe zugrunde, einen Tortenguss zu schaffen, der ohne Aufkochen zubereitet werden kann.

Die der Erfindung zugrunde liegende Aufgabe wird mit den Merkmalen des unabhängigen Patentanspruchs gelöst.

Erfindungsgemäß wird ein lösliches Salz der Alginsäure zusammen mit einem Calciumionendonator für eine Alginat-Calcium-Gelbildungsreaktion verwendet. Der Calciumionendonator liegt dabei in einer schwer oder nicht in Wasser löslichen Form vor. Zusätzlich wird eine Lebensmittelsäure zugegeben.

Aus dem Stand der Technik bekannte Alginat-Calcium-Gelbildungsreaktoren verlaufen sehr schnell im Sekundenbereich. Dies ist für manche Anwendungsgebiete, wie z.B. die Herstellung von so genannter Götterspeise oder Wackelpeter vorteilhaft. Für die Zubereitung von Tortenguss sind solche aus dem Stand der Technik an sich bekannte Alginat-Calcium-Gelbildungsreaktionen jedoch nicht geeignet, da die Gelbildungsreaktion hinreichend langsam verlaufen muss, um den Tortenguss auf dem Kuchen- oder Tortenbelag zu verteilen.

Aus der DE 695 20 737 T2 ist ein Verfahren zur Nahrungsmittelumstrukturierung mit Kontrolle des Gelierens einer Alginat-Calcium-Gelbildungsreaktion bekannt und zwar für die Nahrungsmittel Gemüse, Frucht oder Fleisch. Insbesondere aus geschmacklichen Gründen ist die dort offenbarte Art der Kontrolle des Gelierens für Tortenguss nicht einsetzbar.

Aus der DE-OS 1 642 561 und der DE 24 20 622 A1 ist ferner an sich die Verwendung von Alginaten für Obsttorten bzw. als Grundmasse für kalt anrührbare Nahrungsmittel-Einbettungsmassen bekannt.

Aus der WO 02 / 094 034 A2, EP 03 213 23 A1, US 3,060,032, FR 26 49 299, EP 0 437 360 A1, US 4,303,681, US 3,016,302 und FR 11 37 740 sind verschiedene weitere Anwendungen der Alginat-Calcium-Gelbildungsreaktion für Nahrungsmittel bekannt.

Erfindungsgemäß wird Calciumphosphat (CaHPO₄) als Calciumionendonator eingesetzt. Calciumphosphat ist in Wasser praktisch unlöslich. Aufgrund der Zugabe einer Lebensmittelsäure kommt es dennoch zu der Alginat-Calcium-Gelbildungsreaktion, da die Lebensmittelsäure Calciumionen aus dem Calciumphosphat langsam freisetzt. Dadurch wird die Gelbildungsreaktion so verlangsamt, dass eine bequeme Handhabung der zubereiteten Tortengussmasse ermöglicht wird.

Erfindungsgemäß wird Zitronensäure eingesetzt. Dies führt insbesondere zu geschmacklich optimalen Ergebnissen.

Nach einer weiteren bevorzugten Ausführungsform der Erfindung wird Natriumalginat oder Kaliumalginat als lösliches Salz der Alginsäure verwendet. Natriumalginat wird in Form verschiedener Handelsprodukte angeboten. Als besonders vorteilhaft hat sich die Verwendung von PROPANAL® der Firma FMC Biopolymer herausgestellt.

Erfindungsgemäß wird eine Puffersubstanz zur Ausbildung eines Puffersystems mit der Lebensmittelsäure zugesetzt. Hierdurch wird ein bestimmter pH-Wert im Bereich von 3,6 bis 4,3 eingestellt, bei dem die Gelierung optimal gehemmt erfolgt. Aufgrund dieser Stabilisierung des pH-Werts durch das Puffersystem wird sogar auch die Verwendung von Fruchtsaft anstelle von Wasser oder eines Fruchtsaft-Wassergemisches im Verhältnis von z.B. 1 : 1 ermöglicht. Aufgrund des Puffersystems wird vermieden, dass die Fruchtsäure in dem Fruchtsaft zu einer unerwünschten Beschleunigung der Gelbildungsreaktion führt.

Erfindungsgemäß wird als Säure-Base-Paar für die Pufferlösung Zitronensäure und Tri-Natriumcitrat eingesetzt.

Erfindungsgemäß wird Carboxymethylcellulose als Verdickungsmittel verwendet, um die Viskosität des zubereiteten Tortengusses zu erhöhen. Die Verringerung der Fließfähigkeit hat den Vorteil, dass sich der Tortenguss- auf dem Belag besser verteilen lässt und nicht herunterfließt. Dieses Verdickungsmittel ist beispielsweise unter dem Handelsnamen Akucell AF318 kommerziell erhältlich. Von besonderem Vorteil ist hierbei, dass auch bei Verwendung eines Verdickungsmittels ein Aufkochen der Tortenguss-Zubereitung nicht erforderlich ist.

Erfindungsgemäss ist das Verfahren zur Zubereitung von Tortenguss mittels Tortengusspulver dadurch gekennzeichnet, dass das Tortengusspulver die folgenden Zutaten in Gewichtsprozent beinhaltet:

| | |
|---|---|
| Lösliches Salz der Alginsäure | 7 bis 18 % |
| Zitronensäure | 3 bis 8 % |
| Di-Calciumphosphat | 0,3 bis 2 % |
| Tri-Natriumcitrat | 1 bis 4 % |
| Carboxymethylcellulose | 1 bis 6 % |
| Zucker | 60 bis 80 % |

wobei das Tortengusspulver in einen Viertelliter kalten Leitungswassers oder Wasser mit Zimmertemperatur eingerührt wird,
wobei das Einrühren während einer Minute erfolgt,
wobei durch das das Puffersystem der pH-Wert auf zwischen 3,6 und 4,3 eingestellt wird.

Die Anteile sind dabei in Gewichtsprozent angegeben. Zusätzlich kann Lebensmittelfarbstoff zugegeben werden, um z. B. roten Tortenguss herzustellen.

Aufgrund der langsamen Freisetzung von Calciumionen aufgrund der schwachen Lebensmittelsäure verläuft die Gelbildung innerhalb einiger Minuten, z.B. 4 bis 8 Minuten. Diese Gelbildungsgeschwindigkeit ermöglicht eine optimale Handhabung des Tortengusses, d.h. das Aufbringen und die Verteilung des Tortengusses auf dem Kuchen- oder Tortenbelag.

Alternativ kann die Flüssigkeit einen Anteil von bis 50% Fruchtsaft aufweisen.

Das Pulver wird dann z. B. eine Minute lang mit einem Schneebesen oder einer Gabel in die Flüssigkeit eingerührt. Dabei ist eine Erwärmung der Flüssigkeit nicht erforderlich. Nach dem Einrühren wird der zubereitete Tortenguss auf die belegte Torte gegeben und geliert dort innerhalb weniger Minuten, ohne den Tortenboden zu durchweichen.

Zur optimalen Einstellung der Geliergeschwindigkeit hat sich ein pH-Wert im Bereich zwischen 3,6 bis 4,3 als ideal herausgestellt. Dieser pH-Wert wird durch z.B. das Puffersystem aus Zitronensäure und Tri-Natriumcitrat eingestellt, und zwar auch dann, wenn Fruchtsaft verwendet wird.

In diesem pH-Wert-Bereich werden die Calciumionen sehr langsam von der Zitronensäure aus dem Calciumphosphat freigesetzt, sodass es zu einer entsprechenden Verlangsamung der Alginat-Calcium-Gelbildungsreaktion kommt. Besonders-vorteilhaft ist dabei, dass durch dieses Puffersystem auch die Fruchtsäuren aus Obstsäften abgepuffert werden, welche die Gelbildungsreaktion dann nicht wesentlich beschleunigen können.

Besonders vorteilhaft ist bei der Verwendung des erfindungsgemäßen Tortengusspulvers, dass die Erwärmung des Wassers oder gar ein Aufkochen zur Auslösung der Gelbildungsreaktion und für das Aufschließen des Verdickungsmittels, wie im Stand der Technik üblich, nicht erforderlich ist, und dass die Gelierung der auf den Kuchen- oder Tortenbelag aufgebrachten Tortengussmasse schnell, innerhalb weniger Minuten erfolgt.

Unter Verwendung der erfindungsgemäßen Tortengussmasse kann also z. B. ein belegter Obstkuchen innerhalb kürzester Zeit hergestellt werden, wenn der fertige Kuchenboden mit Früchten belegt wird, die sodann mit der Tortengussmasse übergossen werden. Insbesondere erübrigt es sich auch, das Erkalten des Tortengusses abzuwarten.

## Patentansprüche

1. Verfahren zur Zubereitung von Tortenguss mittels Tortengusspulver **dadurch gekennzeichnet, dass** das Tortengusspulver die folgenden Zutaten in Gewichtsprozent beinhaltet:
| | |
|---|---|
| lösliches Salz der Alginsäure | 7 bis 18 % |
| Zitronensäure | 3 bis 8 % |
| Di-Calciumphosphat | 0,3 bis 2 % |
| Tri-Natriumcitrat | 1 bis 4 % |
| Carboxymethylcellulose | 1 bis 6 % |
| Zucker | 60 bis 80 % |
wobei das Tortengusspulver in einen Viertelliter kalten Leitungswassers oder Wasser mit Zimmertemperatur eingerührt wird,
wobei das Einrühren während einer Minute erfolgt,
wobei durch das Puffersystem der pH-Wert auf zwischen 3,6 und 4,3 eingestellt wird.

## Claims

1. Method for preparing flan glaze by means of flan glaze powder, **characterized in that** the flan glaze powder comprises the following ingredients in percent by weight:
| | |
|---|---|
| Soluble salt of alginic acid | 7 to 18% |
| Citric acid | 3 to 8% |
| Dicalcium phosphate | 0.3 to 2% |
| Trisodium citrate | 1 to 4% |
| Carboxymethylcellulose | 1 to 6% |
| Sugar | 60 to 80% |
wherein the flan glaze powder is stirred into a quarter of a litre of cold tap water or water at room temperature,
wherein the stirring is performed over 0.5 to 2 minutes,
wherein the pH is set to between 3.6 and 4.3 by the buffer system.

2. Method according to Claim 1, wherein the liquid comprises a proportion of up to 50% fruit juice.

## Revendications

1. Procédé de préparation d'un glaçage pour tarte au moyen d'une poudre de glaçage pour tarte, **caractérisé en ce que** la poudre de glaçage pour tarte contenant les ingrédients suivants en pourcentage en poids :
| | |
|---|---|
| Sel soluble de l'acide alginique | 7 à 18 % |
| Acide citrique | 3 à 8 % |
| Phosphate de dicalcium | 0,3 à 2 % |
| Citrate de trisodium | 1 à 4 % |
| Carboxyméthylcellulose | 1 à 6 % |
| Sucre | 60 à 80 % |
la poudre de glaçage pour tarte étant délayée dans un quart de litre d'eau du robinet froide ou d'eau à température ambiante,
le délayage ayant lieu pendant 0,5 à 2 minutes,
le système tampon ajustant la valeur du pH entre 3,6 et 4,3.

2. Procédé selon la revendication 1, dans lequel le liquide présente une proportion pouvant atteindre 50 % de jus de fruit.
